# EUROPÄISCHE PATENTSCHRIFT

(11) **EP 0 842 973 B1**
(45) Veröffentlichungstag und Bekanntmachung des Hinweises auf die Patenterteilung: **27.08.2003**
(21) Anmeldenummer: 97119146.5
(22) Anmeldetag: 03.11.1997
(51) Int. Cl.: C08J 9/34, C08J 9/14

(54) **Verfahren zur Herstellung harter Polyurethanformkörper mit Integralstruktur**
Process for producing hard integral polyurethane foams
Procédé de préparation de mousses rigides de polyuréthane à structure intégrale

(30) Priorität: 14.11.1996 DE 19647088
(43) Veröffentlichungstag der Anmeldung: 20.05.1998
(73) Patentinhaber: BAYER AG, 51368 Leverkusen (DE)
(72) Erfinder: Haas, Peter, Dr., 42781 Haan (DE); Luckas, Bruno, 51375 Leverkusen (DE); Eisen, Norbert, Dr., 50937 Köln (DE); Ruckes, Andreas, Dr., 40764 Langenfeld (DE)

(56) Entgegenhaltungen:
- EP-A- 0 403 066
- EP-A- 0 608 023
- DE-A- 2 922 769

## Beschreibung

Gegenstand der Erfindung ist ein Verfahren zur Herstellung von harten Polyurethanformkörpern mit einer verdichteten Randzone und einem zelligen Kern, sogenannte Integralschaumstoffe, bei dem als Treibmittel Cyclopentan und/oder C₄-C₇-Kohlenwasserstoffgemische des Siedebereichs 45°-80°C eingesetzt werden.

Zum Aufbau einer verdichteten Randzone mit zelliger Innenstruktur von harten Polyurethanformteilen wurde bis zur Kenntnis des ozonschädigenden Verhaltens nahezu ausschließlich Monofluortrichlormethan (R 11) als Treibmittel verwendet. Einhergehend mit diesen Befunden wurde eine Vielzahl neuer Fluor enthaltender Treibgase vom Typ der Hydrogenfluorkohlenwasserstoffe (HFCKW) und Fluorkohlenwasserstoffe (FKW) entwickelt und untersucht. In diese Untersuchungen wurden schon früher Kohlenwasserstoffe einbezogen, wie aus einigen Patentveröffentlichungen hervorgeht (DE-A 3 430 285, US 3 178 490, US 3 182 104, US 4 065 410, DE-A 2 622 957, US 3 931 106 und DE-A 2 544 560).

Nach Bekanntwerden des ozonschädlichen Verhaltens der Fluorkohlenwasserstoffe hat es nicht an Versuchen gefehlt, andere Arten von Treibmitteln zur Herstellung von zellhaltigen Polyurethanen einzusetzen. So wird in EP-A 364 854 ein Verfahren zur Herstellung von Formkörpern mit einer verdichteten Randzone und einem zelligen Kern, vorzugsweise Schuhsohlen, beschrieben aus an sich bekannten Ausgangsstoffen, jedoch unter Verwendung von niedrig siedenden aliphatischen und/oder cycloaliphatischen Kohlenwasserstoffen mit 4 bis 8 Kohlenstoffatomen im Molekül.

Wie sich beim Nacharbeiten des in der EP 364 854 beschriebenen Verfahrens gezeigt hat, sind die mechanischen Eigenschaften der mit Hilfe von aliphatischen Kohlenwasserstoffen, wie iso- und n-Pentan, hergestellten Polyurethanformkörper, insbesondere was die Oberflächenhärte als wichtiges Werkstoffkriterium anbetrifft, nicht befriedigend, da geringe Shore D-Härten resultieren. Unbefriedigend sind jedoch auch Kohlenwasserstoffe wie n-Heptan und Cyclohexan, da bei Einsatz dieser Kohlenwasserstoffe ebenfalls eine mangelhafte Oberflächenqualität resultiert. Dies war um so überraschender, da in der o.g. europäischen Offenlegungsschrift iso- und n-Pentan als besonders geeignete Treibmittel beschrieben sowie beansprucht werden und in Beispiel 1 der europäischen Patentveröffentlichung gezeigt wird, daß n- und iso-Pentan ähnlich gute mechanische Eigenschaften ergeben wie Monofluortrichlormethan (R 11).

Überraschend wurde nun gefunden, daß durch den Einsatz von Cyclopentan und/oder C₄- bis C₇-Kohlenwasserstoffgemischen mit einem Siedebereich von 45°C bis 80°C als Treibmittel harte Polyurethanformkörper mit Integralstruktur hergestellt werden können, die eine besonders hohe Oberflächenhärte aufweisen und sich deutlich von der durch n-Pentan verursachten Härte abheben. Hinzu kommt ein einwandfreies Fließverhalten der Rohstoffkomponenten auch bei niedrigen Rohstoffverarbeitungstemperaturen.

Gegenstand der vorliegenden Erfindung ist daher ein Verfahren zur Herstellung von harten Polyurethanformkörpern mit einer verdichteten Randzone und einem zelligen Kern, das dadurch gekennzeichnet ist, daß man
a) organische und/oder modifizierte organische Polyisocyanate und/oder Polyisocyanatprepolymere mit
b) mindestens einer Polyolkomponente der OH-Zahl 300 bis 1.850 und einer Funktionalität von 2 bis 8
in Gegenwart von Wasser und in Gegenwart von Cyclopentan und/oder C₄- bis C₇-Kohlenwasserstoffgemischen mit Siedebereichen von 45°C bis 80°C, bevorzugt 45° bis 75°C, als Treibmittel umsetzt.

Die nach dem erfindungsgemäßen Verfahren hergestellten harten Polyurethanformkörper mit Integralstruktur besitzen Shore D-Härten (DIN 53505) von 25 bis 45, bevorzugt 25 bis 40. Die Rohdichte der Integralschaumstoffe beträgt 100 bis 700 kg/m³, bevorzugt 100 bis 600 kg/m³, besonders bevorzugt 100 bis 400 kg/m³.

Nach dem erfindungsgemäßen Verfahren werden die Kohlenwasserstofftreibmittel in Mengen von 0,5 bis 15, bevorzugt 2 bis 12, insbesondere 3,5 bis 11 Gew.-Teile, pro 100 Gew.-Teile der Komponente b) (Polyolkomponente) eingesetzt.

Neben dem Cyclopentan sind Gemische von Kohlenwasserstoffen erfindungsgemäß verwendbar, die z.B. aus
a) i-Butan, n-Butan, n-Pentan und/oder iso-Pentan sowie
b) Cyclohexan, Cyclopentan, Methylcyclopentan, 2-Methylpentan, 3-Methylpentan, 2,2-Dimethylbutan, 2,3-Dimethylbutan, Cyclohexan, n-Hexan, n-Heptan, 3-Methylhexan, 2-Methylhexan, 2,2-Dimethylpentan, 2,3-Dimethylpentan, 3,3-Dimethylpentan und/oder 2,4-Dimethylpentan hergestellt werden, so daß ein Siedebereich von 45°C bis 80°C, bevorzugt 45°C bis 75°C resultiert.

Cyclopentan sowie Gemische von Cyclopentan mit a) und Gemische von a) mit b) liefern Integralschaumstoffe besonders im niedrigen Rohdichtebereich von 100-400 kg/m³ mit überraschend hoher Oberflächenhärte, gutem Fluidverhalten und guter Oberflächenstruktur bei Rohstofftemperaturen um 25°C.

Wie zuvor erwähnt, wird bei dem erfindungsgemäßen Verfahren zusätzlich als Treibmittel noch Wasser verwendet. Die Menge an Wasser, die der Polyurethan-Formulierung zusätzlich einverleibt wird, beträgt üblicherweise 0,05 bis 0,6 Gew.-Teile, vorzugsweise 0,1 bis 0,4 Gew-.Teile, bezogen auf 100 Gew.-Teile der Komponente b) (Polyolkomponente).

Als organische Polyisocyanate (a) kommen die an sich bekannten aliphatischen, cycloaliphatischen, araliphatischen und vorzugsweise aromatischen mehrwertigen Isocyanate in Frage, wie sie beispielsweise in EP-A 364 854 genannt sind.

Besonders geeignet sind die Toluylendiisocyanate und die Diphenylmethandiisocyanate, deren Modifizierungsprodukte oder ihre entsprechenden Prepolymere, die durch Urethan-, Harnstoff-, Biuret-, Allophanat-, Carbodiimid- oder Uretdion-Gruppen modifiziert sein können. Insbesondere werden als aromatische Polyisocyanate genannt:
4,4-Diphenylmethandiisocyanat, Mischungen aus 2,4'- und 4,4'-Diphenylmethandiisocyanat oder Roh-MDI-Typen und/oder 2,4- und/oder 2,6-Toluylendiisocyanat sowie deren Mischungen untereinander.

Als Polyolkomponente (b) eignen sich insbesondere solche mit einer OH-Zahl von bevorzugt 350 bis 1850 und einer Funktionalität von bevorzugt 3 bis 6. Insbesondere bewährt haben sich Polyole ausgewählt aus der Gruppe Polyether-Polyole und Polyester-Polyole, wie sie durch Addition von Alkylenoxiden, wie Ethylenoxid und Propylenoxid, an mehrfunktionelle Starter, wie Ethylenglykol, Propylenglykol, Glycerin, Trimethylolpropan, Sorbit und/oder Ethylendiamin, oder durch Kondensation von Dicarbonsäuren, wie Adipinsäure, Bernsteinsäure, Glutarsäure, Korksäure, Sebacinsäure, Maleinsäure, Phthalsäure, mit überwiegend bifunktionellen Hydroxykomponenten, wie Ethylenglykol, Propylenglykol, Diethylenglykol, erhalten werden. Insbesondere genannt werden Polyetherpolyole, aufgebaut aus Ethylenoxid und Propylenoxid sowie Glycerin, Trimethylolpropan, Ethylendiamin, Propylenglykol, Ethylenglykol, Sorbit und deren Gemische als Starter.

Die Polyether- und Polyesterpolyole können sowohl einzeln als auch im Gemisch untereinander eingesetzt werden.

Das erfindungsgemäße Verfahren eignet sich insbesondere für die Herstellung von harten Polyurethanformkörpern, welche bevorzugt Rohdichten von 100 bis 400 kg/m³ und zudem sehr gute Zähigkeits- sowie Tieftemperatureigenschaften besitzen. Das Fließverhalten der Reaktionskomponenten als Summe aller Reaktionsteilnehmer ist auch im Bereich unterer Rohstoffverarbeitungstemperaturen völlig problemlos.

Die guten Zähigkeits- und Tieftemperatureigenschaften werden dadurch erzielt, daß man der Polyolkomponente b) mit einer OH-Zahl von 300 bis 1.850 und einer Funktionalität von 2 bis 8 noch zusätzlich mindestens eine weitere Polyolkomponente der OH-Zahl 15 bis 800, bevorzugt 25 bis 700, und einer Funktionalität von 2 bis 3 zusetzt (b₂).

Diese Polyolkomponente (bezeichnet als b₂) wird der zuvor genannten Polyolkomponente b) (jetzt bezeichnet als b₁) in Mengen von 5 bis 40 Gew.-%, bevorzugt 7 bis 25 Gew.-%, zugesetzt. Als Polyolkomponenten b₂) kommen insbesondere in Frage Ethylenglykol und Propylenglykol und deren Additionsprodukte mit Propylenoxid und/oder Ethylenoxid. Durch Mitverwendung von z.B. Glycerin oder Trimethylolpropan als Starter lassen sich Funktionalitätsgemische bei der Komponente b₂) von 2 bis 3, bevorzugt 2 bis 2,6, einstellen.

Die Polyolkomponenten b₂₎ können wiederum einzeln oder im Gemisch untereinander der Polyolkomponente b₁₎ zugesetzt werden.

Weiterhin können bei dem erfindungsgemäßen Verfahren die auf diesem Gebiet bekannten Stabilisatoren, Aktivatoren, Löslichkeitsvermittler, Füllstoffe und Flammschutzmittel zugesetzt werden, wie sie ebenfalls aus EP 0 364 854 bekannt sind. Die Mengen der bekannten Zusatzstoffe richtet sich nach dem jeweiligen Einsatzgebiet der erfindungsgemäß hergestellten Polyurethanformkörper und kann leicht durch entsprechende Vorversuche ermittelt werden.

Die Herstellung der erfindungsgemäßen Formkörper ist dem Fachmann ebenfalls bekannt und braucht im Detail nicht mehr näher beschrieben zu werden. Verwiesen wird in diesem Zusammenhang wiederum auf EP-A 364 854.

Die nach dem erfindungsgemäßen Verfahren hergestellten Polyurethanformkörper mit Integralstruktur besitzen in Verbindung mit einer niedrigen Rohdichte eine überraschend hohe Oberflächenhärte, so daß sie sich insbesondere für die Anwendung im Konsum-, Elektro- oder Automobilbereich eignen, z.B. für Stuckimitate, Dekorprofile, Profilimitationen, Holzimitationen, Entlüftungselemente, Türseitenelemente im Automobilbereich und Möbelprofile.

### Beispiele

### Beschreibung der Rohstoffe

| | |
|---|---|
| Polyol 1 | Polyetherpolyol der OH-Zahl 515, hergestellt durch Addition von Propylenoxid an Propylenglykol |
| Polyol 2 | Polyetherpolyol der OH-Zahl 475, hergestellt durch Addition von Propylenoxid an ein Startergemisch aus 80 % Zucker und 20 % Polypropylenglykol |
| Polyol 3 | Polyetherpolyol der OH-Zahl 1000, hergestellt durch Addition von Propylenoxid an Trimethylolpropan |
| Polyol 4 | Polyetherpolyol der OH-Zahl 640, hergestellt durch Addition von Propylenoxid an Ethylendiamin als Starter |
| Polyol 5 | Polyetherpolyol der OH-Zahl 480, hergestellt durch Addition von Propylenoxid an Ethylendiamin als Starter |
| Polyol 6 | Polyetherpolyol der OH-Zahl 35, hergestellt durch Addition von 86 Gew.-% Propylenoxid und 14 Gew.-% Ethylenoxid an Trimethylolpropan als Starter mit überwiegend primären OH-Gruppen |
| Polyisocyanat 1 | Polyisocyanatgemisch der Diphenylmethanreihe, das durch Phosgenierung eines Anilin/Formaldehyd-Kondensates erhalten wurde und einen Isocyanatgehalt von 31,5 % mit einem Gehalt von 60 % Diisocyanatodiphenylmethan sowie 40 % höherkernigen Homologen aufweist. |

Die nachstehend beschriebenen Rohstoffgemische werden in der für die maschinelle Verarbeitung der Polyurethane üblichen Weise in eine auf 50°C geheizte Plattenform der Größe 190 x 155 x 20 mm eingebracht und nach 10 Minuten entformt. Die Temperatur der Rohstoffe beträgt 25°C.

| Rohstoff-Formulierung A | |
|---|---|
| Polyol 1 | 15 Gew.-Teile |
| Polyol 2 | 35 Gew.-Teile |
| Polyol 3 | 18 Gew.-Teile |
| Polyol 6 | 15 Gew.-Teile |
| Wasser | 0,25 Gew.-Teile |
| Stabilisator B 8423 (Goldschmidt) | 1,5 Gew.-Teile |
| Desmorapid 726b (Bayer AG) | 1,0 Gew.-Teile |
| Desmorapid PV | 1,0 Gew.-Teile |
| Emulgator PU 1748 (Bayer AG) | 3,0 Gew.-Teile |

| Rohstoff-Formulierung B | |
|---|---|
| Polyol 1 | 17 Gew.-Teile |
| Polyol 2 | 40 Gew.-Teile |
| Polyol 4 | 37 Gew.-Teile |
| Wasser | 0,25 Gew.-Teile |
| Stabilisator B 8423 | 1,3 Gew.-Teile |
| Desmorapid 726b | 0,1 Gew.-Teile |
| Desmoraphid PV | 0,1 Gew.-Teile |
| Emulgator PU 1748 | 3,0 Gew.-Teile |
| Ölsäure | 1,0 Gew.-Teile |

| Rohstoff-Formulierung C | |
|---|---|
| Polyol 1 | 15 Gew.-Teile |
| Polyol 2 | 45 Gew.-Teile |
| Polyol 4 | 20 Gew.-Teile |
| Polyol 5 | 20 Gew.-Teile |
| Wasser | 0,25 Gew.-Teile |
| Stabilisator B 8423 | 1,5 Gew.-Teile |
| Desmorapid 726b | 0,1 Gew.-Teile |
| Desmorapid PV | 0,1 Gew.-Teile |
| Ölsäure | 1,0 Gew.-Teile |

### Treibmittel

I. Cyclopentan (Kp.: 49°C)
II. Gemisch aus 0,8 m Cyclohexan und 0,2 m iso-Pentan (Kp.: 62°C)
III. Gemisch aus 0,9 m Cyclohexan und 0,1 m n-Butan (Kp.: 60°C)
IV. Gemisch aus 0,25 m iso-Pentan und 0,75 m n-Heptan (Kp.: 65°C)
V. Gemisch aus 0,15 m iso-Pentan und 0,85 m Methylcyclopentan (Kp.: 60°C)
VI. Gemisch aus 0,1 m n-Butan und 0,9 m Methylcyclopentan (Kp.: 55°C)
VII. Gemisch aus 0,15 m iso-Pentan und 0,85 m 2-Methylhexan (Kp.: 72°C)
VIII. Gemisch aus 0,9 m Cyclopentan und 0,1 m n-Heptan (Kp.: 52°C)
IX. Gemisch aus 0,9 m Cyclohexan und 0,1 m iso-Pentan (Kp.: 70°C)
X. Gemisch aus 0,1 m Methylcyclopentan und 0,9 m Cyclopentan (Kp.: 51°C) m = mol

### Beispiele 1 bis 4

**Tabelle 1**

| Gew.-Teile/Schaumstoff-Nr. | 1 | 2 | 3 | 4 |
|---|---|---|---|---|
| Polyolformulierung A | 100 | 100 | 100 | 100 |
| Polyisocyanat 1 | 135 | 135 | 135 | 135 |
| Cyclopentan | 9 | - | - | - |
| n-Pentan | - | 8 | - | - |
| R 11 | - | - | 15 | - |
| R 365 | - | - | - | 17 |
| Startzeit (sec) | 21 | 19 | 23 | 20 |
| Abb.-Zeit (sec) | 95 | 103 | 84 | 98 |
| Rohdichte, frei (kg/m³) | 53 | 55 | 58 | 56 |
| Rohdichte, Form (kg/m³) | 180 | 180 | 180 | 180 |
| Shore-D-Härte | | | | |
| nach 24 h | 30 | 20 | 23 | 26 |
| nach 120 h | 38 | 23 | 29 | 27 |

### Beispiel 5 bis 7

**Tabelle 2**

| Gew.-Teile/Schaumstoff-Nr. | 5 | 6 | 7 |
|---|---|---|---|
| Polyolformulierung B | 100 | 100 | 100 |
| Polyisocyanat 1 | 140 | 140 | 140 |
| R 11 | 15 | - | - |
| n-Pentan | - | 8 | - |
| Cyclopentan | - | - | 9 |
| Startzeit (sec) | 24 | 22 | 22 |
| Abb.-Zeit (sec) | 75 | 79 | 77 |
| Rohdichte, frei (kg/m³) | 67 | 64 | 63 |
| Rohdichte, Form (kg/m³) | 180 | 180 | 180 |
| Shore-D-Härte | | | |
| nach 24 h | 20 | 20 | 28 |
| nach 120 h | 23 | 22 | 34 |

### Beispiele 8 bis 10

**Tabelle 3**

| Gew.-Teile/Schaumstoff-Nr. | 8 | 9 | 10 |
|---|---|---|---|
| Polyolformulierung C | 100 | 100 | 100 |
| Polyisocyanat 1 | 130 | 130 | 130 |
| R 11 | 15 | - | - |
| n-Pentan | - | 9 | - |
| Cyclopentan | - | - | 8 |
| Startzeit (sec) | 25 | 23 | 22 |
| Abb.-Zeit (sec) | 76 | 77 | 78 |
| Rohdichte, frei (kg/m³) | 66 | 64 | 64 |
| Rohdichte, Form (kg/m³) | 180 | 180 | 180 |
| Shore-D-Härte | | | |
| nach 24 h | 21 | 20 | 28 |
| nach 120 h | 24 | 22 | 32 |

Die durch Cyclopentan resultierende hohe Härte geht aus den Beispielen 1, 7 und 10 hervor, während die Härte durch n-Pentan gemäß Beispiel 2, 6 und 9 extrem niedriger ausfällt. Überraschend ist weiterhin, daß die halogenierten Treibgase 3, 4, 5 und 8 ebenfalls die Oberflächenhärte von Cyclopentan nicht erreichen und in größerer Aufwandmenge verwendet werden müssen, um die angestrebte Rohdichte von 160 kg/m³ im Formteil einstellen zu können. Dieser Härteeffekt des Cyclopentans ermöglicht z.B. eine Gewichtsreduzierung von Integralschaumstoff-Formteilen, ohne daß die geforderte Werkstoffhärte als wichtige Materialeigenschaft eingebüßt wird.

Durch Cyclopentan sind im unteren Rohdichtebereich nun Härten erzielbar, die bisher nur höheren Rohdichten vorbehalten waren.

Dieser Effekt gilt nun nicht nur für Cyclopentan, sondern überraschend auch für beliebige Gemische von Kohlenwasserstoffen eines Siedebereiches von 45°C bis 80°C, bevorzugt 45°C bis 75°C.

### Beispiel 11-14

**Tabelle 4**

| Gew.-Teile/ Schaumstoff-Nr. | 11 | 12 | 13 | 14 |
|---|---|---|---|---|
| Polyolformulierung A | 100 | 100 | 100 | 100 |
| Polyisocyanat 1 | 140 | 140 | 140 | 140 |
| Treibmittel II | 10 | | | |
| Treibmittel III | | 10 | | |
| Treibmittel IV | | | 10 | |
| Treibmittel V | | | | 10 |
| Startzeit (sec.) | 23 | 24 | 24 | 24 |
| Abb.-Zeit (sec.) | 90 | 88 | 79 | 84 |
| Rohdichte frei (kg/m³) | 58 | 56 | 55 | 57 |
| Rohdichte, Form (kg/m³) | 180 | 180 | 180 | 180 |
| Shore-D-Härte | | | | |
| nach 24 h | 30 | 31 | 31 | 30 |
| nach 120 h | 37 | 38 | 38 | 39 |

### Beispiel 15-18

**Tabelle 5**

| Gew.-Teile/ Schaumstoff-Nr. | 15 | 16 | 17 | 18 |
|---|---|---|---|---|
| Polyolformulierung A | 100 | 100 | 100 | 100 |
| Polyisocyanat 1 | 140 | 140 | 140 | 140 |
| Treibmittel VI | 10 | | | |
| Treibmittel VII | | 10 | | |
| Treibmittel VIII | | | 10 | |
| Treibmittel IX | | | | 10 |
| Startzeit (sec.) | 23 | 22 | 24 | 23 |
| Abb.-Zeit (sec.) | 88 | 90 | 91 | 92 |
| Rohdichte frei (kg/m³) | 58 | 59 | 59 | 57 |
| Rohdichte, Form (kg/m³) | 180 | 180 | 180 | 180 |
| Shore-D-Härte | | | | |
| nach 24 h | 29 | 31 | 30 | 31 |
| nach 120 h | 39 | 40 | 38 | 38 |

Die Ergebnisse in der Oberflächenhärte belegen, daß auch Treibmittelgemische II-X geeignet sind, hohe Werte in der Oberflächenhärte im unteren Rohdichtebereich zu bewirken. Dies ist insofern überraschend, da z.B. diese einzelnen Kohlenwasserstoffe, wie z.B. n-Pentan, iso-Pentan und Cyclohexan, nicht geeignet sind, eine hohe Oberflächenhärte, Fließverhalten und eine gute Oberflächenstruktur gleichermaßen zu ergeben, was besonders für Cyclohexan und Heptan gilt.

Zwar haben die beanspruchten Kohlenwasserstoffe bzw. Kohlenwasserstoffgemische einen Siedebereich von 45-80°C, bevorzugt 45-75°C, während n-Pentan und iso-Pentan mit 36°C bzw. 28°C deutlich darunter liegen, überraschend in diesem Zusammenhang ist jedoch, daß Monofluortrichlormethan (R11) ebenfalls einen tiefen Siedepunkt (23,7°C) aufweist, in der Oberflächenhärte dem n- und iso-Pentan jedoch überlegen ist. R 11 erreicht dagegen keinesfalls die Oberflächenhärte der beanspruchten Kohlenwasserstoffe bzw. Kohlenwasserstoffgemische, was nicht zu erwarten war.

## Patentansprüche

1. Verfahren zur Herstellung von harten Polyurethanformkörpern mit einer verdichteten Randzone und einem zelligen Kern, **dadurch gekennzeichnet, daß** man
a) organische und/oder modifizierte organische Polyisocyanate und/oder Polyisocyanatprepolymere mit
b) mindestens einer Polyolkomponente der OH-Zahl 300 bis 1.850 und einer Funktionalität von 2 bis 8
in Gegenwart von Wasser und in Gegenwart von Cyclopentan und/oder C₄bis C₇-Kohlenwasserstoffgemischen des Siedebereichs von 45°C bis 80°C als Treibmittel umsetzt.

2. Verfahren nach Anspruch 1, **dadurch gekennzeichnet, daß** man der Polyolkomponente b) noch mindestens eine Polyolkomponente der OH-Zahl 15 bis 800 mit einer Funktionalität von 2 bis 3 in einer Menge von 5 bis 40 Gew.-% zusetzt.

3. Verfahren nach Ansprüchen 1 und 2, **dadurch gekennzeichnet, daß** die Polyurethanformkörper eine Shore-D-Härte von 25 bis 45 besitzen.

4. Verfahren nach Ansprüchen 1 bis 3, **dadurch gekennzeichnet, daß** die Polyurethanformkörper eine Rohdichte von 100 bis 700 kg/m³ aufweisen.

5. Verfahren nach Ansprüchen 1 bis 3, **dadurch gekennzeichnet, daß** die Polyurethanformkörper eine Rohdichte von 100 bis 600 kg/m³ aufweisen.

6. Verfahren nach Ansprüchen 1 bis 3, **dadurch gekennzeichnet, daß** die Polyurethanformkörper eine Rohdichte von 100 bis 400 kg/m³ aufweisen.

## Claims

1. Process for the production of rigid polyurethane mouldings having a compacted peripheral zone and a cellular core, **characterised in that**
a) organic and/or modified organic polyisocyanates and/or polyisocyanate prepolymers are reacted with
b) at least one polyol component of an OH value of 300 to 1850 and a functionality of 2 to 8
in the presence of water and in the presence of cyclopentane and/or C₄ to C₇ hydrocarbon mixtures of a boiling range of 45°C to 80°C as the blowing agent.

2. Process according to claim 1, **characterised in that** a quantity of 5 to 40 wt.% of at least one further polyol component of an OH value of 15 to 800 and a functionality of 2 to 3 is added to the polyol component b).

3. Process according to claim 1 or 2, **characterised in that** the polyurethane mouldings have a Shore D hardness of 25 to 45.

4. Process according to claims 1 to 3, **characterised in that** the polyurethane mouldings have a bulk density of 100 to 700 kg/m³.

5. Process according to claims 1 to 3, **characterised in that** the polyurethane mouldings have a bulk density of 100 to 600 kg/m³.

6. Process according to claims 1 to 3, **characterised in that** the polyurethane mouldings have a bulk density of 100 to 400 kg/m³.

## Revendications

1. Procédé de préparation de pièces moulées en polyuréthane avec une zone périphérique condensée et un noyau cellulaire, **caractérisé en ce qu'**on fait réagir
a) des polyisocyanates organiques et/ou organiques modifiés et/ou des prépolymères de polyisocyanate avec
b) au moins un composant polyalcool avec un nombre de OH de 300 à 1850 et une fonctionnalité de 2 à 8
en présence d'eau et en présence de cyclopentane et/ou de mélanges d'hydrocarbures en C₄ à C₇ dont le point d'ébullition va de 45°C à 80°C comme agent porophore.

2. Procédé selon la revendication 1, **caractérisé en ce qu'**on ajoute au composant polyalcool b) encore au moins un composant polyalcool avec un nombre de OH de 15 à 800 et une fonctionnalité de 2 à 3 dans une quantité de 5 à 40 % en poids.

3. Procédé selon les revendications 1 et 2, **caractérisé en ce que** les pièces moulées en polyuréthane possèdent une dureté Shore-D de 25 à 45.

4. Procédé selon les revendications 1 à 3, **caractérisé en ce que** les pièces moulées en polyuréthane présentent une masse volumique apparente de 100 à 700 kg/m³.

5. Procédé selon les revendications 1 à 3, **caractérisé en ce que** les pièces moulées en polyuréthane présentent une masse volumique apparente de 100 à 600 kg/m³.

6. Procédé selon les revendications 1 à 3, **caractérisé en ce que** les pièces moulées en polyuréthane présentent une masse volumique apparente de 100 à 400 kg/m³.
